# EUROPEAN PATENT APPLICATION

(11) **EP 2 913 087 A1**
(43) Date of publication of application: **02.09.2015**
(21) Application number: 14157204.0
(22) Date of filing: 28.02.2014
(51) Int. Cl.: A63F 13/90, A63F 9/24

(54) **Interactive digital toy**

(71) Applicant: Martins, Junior, 19026-250 Sao Paolo (BR)
(72) Inventor: Martins, Junior, 19026-250 Sao Paolo (BR)
(74) Representative: Bradley, Adrian

(57) **Abstract**

Digital interactive toy comprises a structure (1) from any shape and theme, providing seats (2) and stands (3) for placing one or more tablets (4) in front of such seats, where users can have fun with different gaming applications, being the interactions effected by touches of the screens of tablets (4).

## Description

The invention disclosed is an apparatus, specifically a new digital interactive toy, especially a toy with a single structure or modular structure, of any shape and theme, for example an octopus, a sun, a ship, etc., in which is installed multiple tablet touch screens with for example gaming or educational applications, strategically positioned on said structure so that individuals are able to sit around said structure in a collective way, and participate in the amusement or educational activities positioned ergonomically and comfortably. The apparatus has a wide variety of possible structures and applications.

The toy can be used in game stores/recreational areas in Malls, children's buffets, schools, nurseries and any location related to recreation or education.

The recreation field is fiercely competitive and is one of the fastest growing sectors of the economy in general, however the target audience is eager for innovation.

In this field, there are several aspects and options, ranging from more radical and mechanical toys, ranging from those that simulate a basketball game, soccer, tennis, car racing and related, and, finally, in accordance with the focus of this invention, virtual games having several themes, including those with a platform for use with *tablets.*

Likewise, virtual games have become affordable for home use, where computers with their applications and games go beyond the imagination of any person, such is the realism of the action.

The ease and accessibility of games often discourages people to go outside of the home to have fun, which corroborates the above statement, that for the commercial arm of recreation to keep alive it is necessary to continuously provide new games

On the other hand, as it relates to children of small age in places frequented by families, e.g., malls and restaurants, it is desirable to have attractive things to distract children, so that parents and/or other adults can talk and have fun too, which becomes impractical if children lack options for recreation.

Yet, related to children of a young age or people with no familiarity with computers, it is necessary to insert these into the digital world, both for the reasons of this decrease of barriers in the world we live in, as the reason to leverage the capabilities of interaction and learning that digital media can bring, exercising coordination and expanding children's interest, especially with touch screen tablets, since these make interaction possible, even for those who still have little coordination.

The current state of the art discloses some patent documents that deal with the matter under consideration, as MU7300460-0 "Pre-Assembled Kit for Videogame Cabinet" - video games installed in cabinets and driven by chips, whose highlight is the modular construction, thereby facilitating their transport.

The above equipment, despite performing well the function for which it was designed, presents no feature that distinguishes it from other toys, considering that similar items have been on the market for a number of years. Furthermore, play is individual in nature, and interaction with the images is effected with joysticks, which are not always easy to handle.

PI0903827-2 "Inflatable Toy Shaped Globe" - manufactured with two plastic globes, one within the other, with spacer of same material and with two external handles for people to hold when inside the globe.

On the other hand, this toy, widely used in playgrounds, does not conflict at all with the patent application claimed since it is not a game.

Aware of the state of the art, its gaps and limiting, the inventor, a person accustomed to the matter under consideration, after observations and studies, noted that for the use of tablet computers on the market there was a lack of any self-supporting structure that made feasible the public/collective use of tablet computers, and thus conceived the disclosed digital interactive toy, to be mounted on a single structure or modular structure, compatible with the locale and age of potential users, capable of coupling several tablets installed with e.g. gaming applications, making thus their use communal, interesting, safe and comfortable, also aesthetically striking.

In a way of enabling, the invention may be the theme of a stylized animal with seats and stands for the placement of tablets with touch screens in which the interaction is effected by touches, therefore proposing a friendlier interface, that added to the shape of the structure makes the apparatus very attractive.

To follow, the invention is explained with respect to the accompanying drawings, in which are represented, by way of illustration and not limitation:
Fig. 1: Perspective view of digital interactive toy mounted on a structure in the shape of a stylized octopus;
Fig. 2: Exploded perspective view of digital interactive toy mounted on a structure in the shape of a stylized octopus;
Fig. 3: Sectional view of digital interactive toy mounted on a structure in the shape of a stylized octopus;
Fig. 4: Perspective view of digital interactive toy mounted on a structure in the shape of a stylized octopus, showing use;
Fig. 5: Perspective view of digital interactive toy mounted on a structure in the shape of a spaceship.

The digital interactive toy of this patent request comprises a structure (1) from any shape and theme, provided with a plurality of seats (2) and stands (3) adapted to receive tablet computers (4), located generally in front of such seats, wherein a plurality of users are able to sit on the seats (2) and conveniently reach the touch screen of tablet computers (4) in order to participate in communal or individual computing experiences with other users.

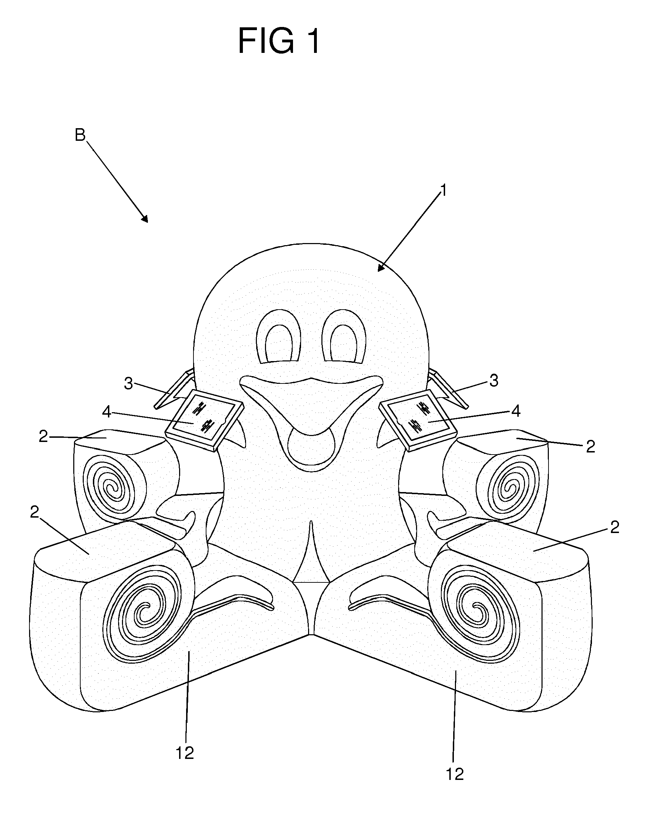

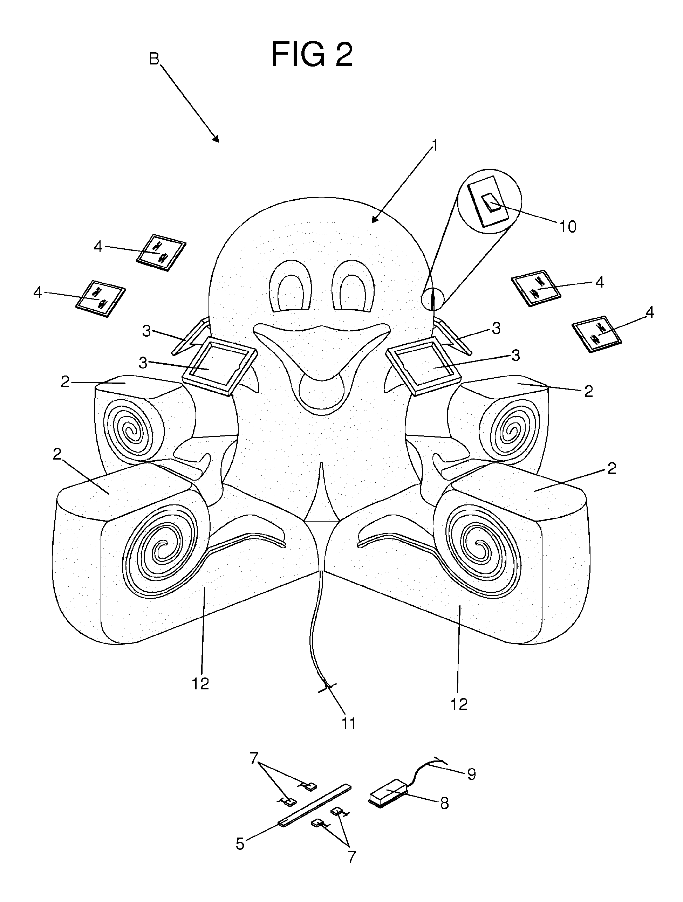

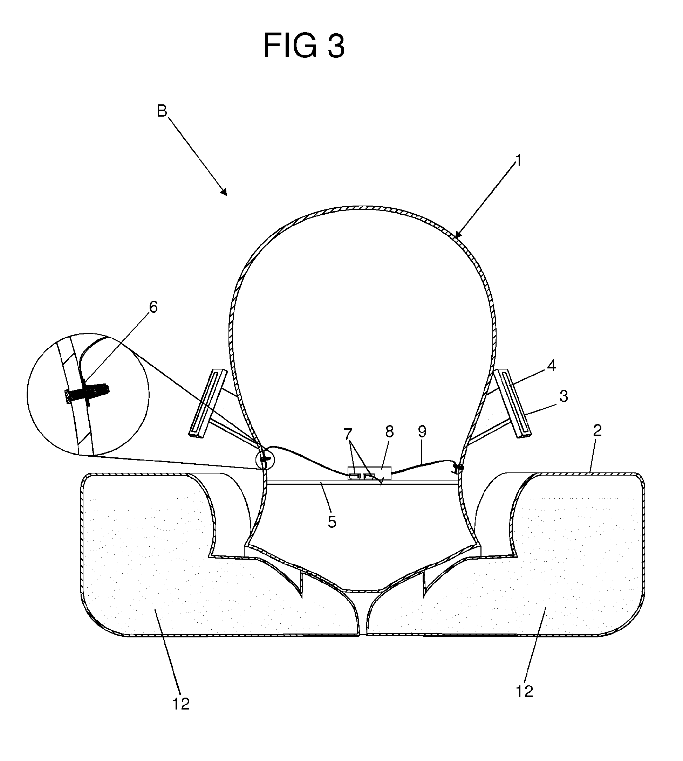

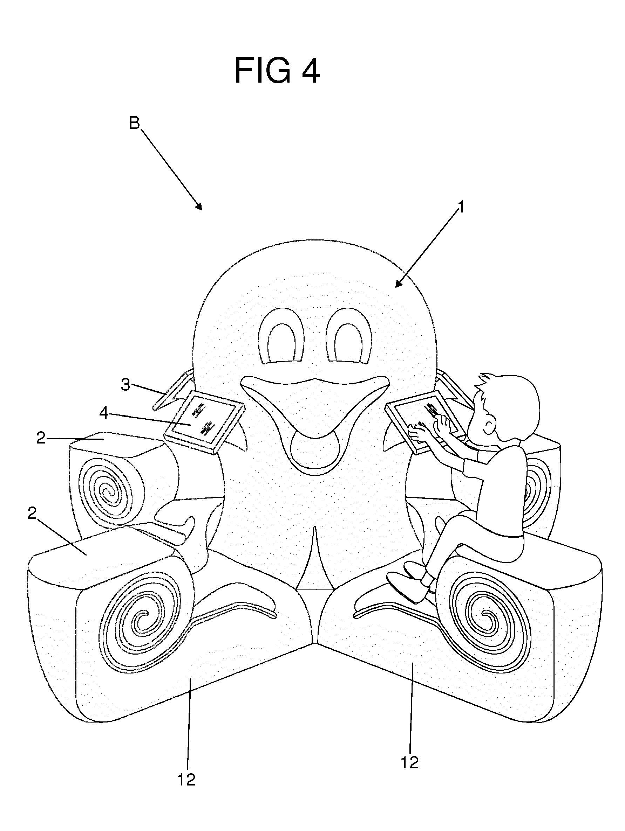

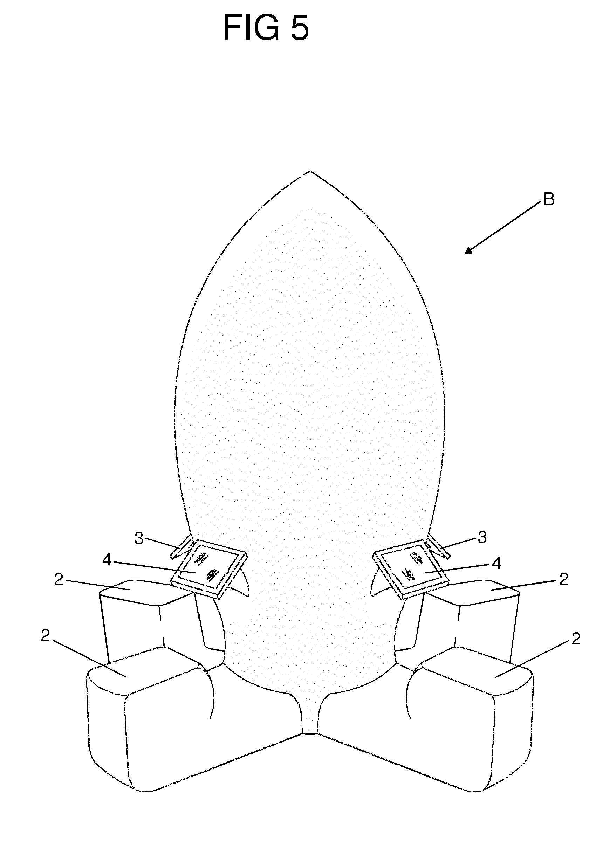

More particularly, the apparatus of the invention (B) comprises a self-supporting structure (1) from any shape, dimension, and theme, optionally but preferably having seats (2) and stands (3) in front of said seats for receiving tablet computers (4) installed with appropriate e.g. gaming applications, which have easy interaction with users due to their touchscreen technology. Internally, the structure (1) has a powerstrip (5), properly grounded (6), for connection of the sources (7) of tablets (4), which have their voltages equalized by stabilizer (8) which derives a connecting cable (9) toward a switch (10) and thence to the external power network (11). According to the figures 1 to 4, in an embodiment, the invention is best represented by a stylized structure (1) in the shape of a octopus, from whose tentacles (12) form seats (2), while, from the midline and transverse line of head, the stands (3) protrude for the reception of tablets (4), with all electrical parts, in other words, powerstrip (5), sources (7),stabilizer (8), being located in the basal portion of the inner body of the octopus; the outside part of the octopus comprises the on-off switch (10). In another embodiment, as shown in figure 5, the toy (B) is mounted on a spacecraft, similarlystylized.

Thereby, without deviating from the inventive concept, it is possible to make several structures, collective or individual, as well as a myriad of other gaming applications embedded in the tablets.

## Claims

1. Apparatus comprising a self-supporting structure (1), of any shape, dimension and theme, optionally provided with seats (2) and stands (3) adapted to receive tablet computers (4), using touchscreen technology, wherein internally, the structure (1) has a powerstrip (5), properly grounded (6), for connection to the power outlets (7) appropriate for connection to tablets (4), which have their voltages equalized by stabilizer (8) attached by a connecting cable (9) through a switch (10) to the external power network (11).
